# EUROPEAN PATENT SPECIFICATION

(11) **EP 4 478 229 B1**
(45) Date of publication and mention of the grant of the patent: **10.12.2025**
(21) Application number: 24180748.6
(22) Date of filing: 07.06.2024
(51) Int. Cl.: G06F 21/57, G06F 8/61

(54) **LOADING AND MANAGING APPLICATION PROGRAMMING INTERFACES (APIS) ON A USER EQUIPMENT (UE)**
LADEN UND VERWALTEN VON ANWENDUNGSPROGRAMMIERUNGSSCHNITTSTELLEN (APIS) AUF EINEM BENUTZERGERÄT (UE)
CHARGEMENT ET GESTION D'INTERFACES DE PROGRAMMATION D'APPLICATION (API) SUR UN ÉQUIPEMENT UTILISATEUR (UE)

(30) Priority: 12.06.2023 US 202318333233
(43) Date of publication of application: 18.12.2024
(73) Proprietor: T-Mobile Innovations LLC, Bellevue, WA 98006 (US)
(72) Inventor: BALMAKHTAR, Marouane, Fairfax, 22030 (US); PACZKOWSKI, Lyle W., Mission Hills, 66208 (US)
(74) Representative: Suddaby, Mark Edward

(56) References cited:
- US-A1- 2019 384 587
- US-A1- 2022 092 925

## Description

### BACKGROUND

Application programming interfaces (APIs) may be downloaded to user communication devices for accessing on-line services. The on-line services may be bank accounts, credit card accounts, retirement accounts, wireless communication subscription accounts, healthcare accounts, premium content delivery accounts, streaming video accounts, gaming applications, and other on-line services. Because these APIs may act as portals to valuable on-line services, service providers may prefer to control access to these APIs. Patent documents US2022092925 and US2019384587 disclose relevant prior art.

### SUMMARY

In an embodiment, a method of provisioning an application programming interface (API) to a user equipment (UE) is disclosed. The method comprises receiving a request from the UE for the API by a distributed application executing on a computer system, wherein the request identifies a context of the UE and an application service provided by an application server separate from the distributed application and analyzing the context of the UE by the distributed application to identify a context-specific template smart contract stored in ledger data store, wherein the ledger data store comprises a plurality of blocks, wherein each block of the ledger data store except the first block comprises a hash value of a preceding block, a data content of the block, a nonce value of the block, and a hash value of the block determined over the hash of the preceding block, the data content of the block, and the nonce value of the block and wherein the context-specific template smart contract defines a manifest for fetching a plurality of API smart contract components from the ledger data store. The method further comprises sending the context specific template smart contract by the distributed application to the UE; receiving a request by the distributed application from the UE for the plurality of API smart contract components; and sending the plurality of API smart contract components by the distributed application, to the UE, whereby the UE is enabled to build a context-specific version of the API on the UE from the plurality of API smart contract components and to access the application service provided by the application server.

In another embodiment, a method of managing an application programming interface (API) installed on user equipment (UE) is disclosed. The method comprises sending a request from the UE for an API to a distributed application executing on a computer system, wherein the request defines a context of the UE and an application service provided by an application server separate from the distributed application and receiving a template smart contract by the UE from the distributed application, wherein the template smart contract is identified by the distributed application based on the context of the UE and wherein the template smart contract defines a manifest for fetching a plurality of API smart contract components from a ledger data store associated with the distributed application and defines instructions for building the API by executing at least some of the API smart contract components. The method further comprises retrieving a first plurality of API smart contract components identified by the manifest by the UE from the ledger data store, wherein the first plurality of API smart contract components are a first version of the API smart contract components; executing at least some of the first plurality of API smart contract components by the UE, whereby a first version of the API is built by the UE; and executing the first version of the API by the UE, whereby the UE accesses the application service associated with the API. The method further comprises, after executing the first version of the API by the UE, retrieving a second plurality of API smart contract components identified by the manifest by the UE from the ledger data store, wherein the second plurality of API smart contract components are a second version of the API smart contract components identified by the manifest; executing at least some of the second plurality of API smart contract components by the UE, whereby a second version of the API is built by the UE; and executing the second version of the API by the UE, whereby the UE accesses the application service associated with an updated version of the API.

In yet another embodiment, a method of installing an application programming interface (API) in a user equipment (UE). The method further comprises sending a request from the UE for an API to a distributed application executing on a computer system, wherein the request defines a context of the UE and an application service provided by an application server separate from the distributed application. The method further comprises receiving a template smart contract by the UE from the distributed application, wherein the template smart contract is identified by the distributed application based on the context of the UE and wherein the template smart contract defines a manifest for fetching a plurality of API smart contract components from a ledger data store associated with the distributed application and defines instructions for building the API by executing at least some of the API smart contract components. The method further comprises executing the at least some of the API smart contract components by the UE, whereby the API is built by the UE; and executing the API by the UE, whereby the UE accesses the application service associated with the API.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2 is an illustration of an association of API component identities in a template smart contract to API components in a data structure according to an embodiment of the disclosure.
FIG. 3 is a flow chart of a method according to an embodiment of the disclosure.
FIG. 4A and FIG. 4B is a flow chart of another method according to an embodiment of the disclosure.
FIG. 5 is a flow chart of yet another method according to an embodiment of the disclosure.
FIG. 6 is an illustration of a wireless communication device according to an embodiment of the disclosure.
FIG. 7 is a block diagram of a hardware architecture of a wireless communication device according to an embodiment of the disclosure.
FIG. 8A and FIG. 8B are block diagrams of a communication network according to an embodiment of the disclosure.
FIG. 9A is a block diagram of a software architecture of a wireless communication device according to an embodiment of the disclosure.
FIG. 9B is a block diagram of another software architecture of a wireless communication device according to an embodiment of the disclosure.
FIG. 10 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

A wide variety of wireless communication devices may download and install one or more application programming interfaces (APIs) whereby to access services from an application server. These wireless communication devices may be smart phones, wearable computers, headset computers, laptop computers, tablet computers, notebook computers, desktop computers, and/or Internet of Things (IoT) devices. IoT devices may be embedded in appliances such as refrigerators, HVAC (heating, ventilation, and air conditioning) systems, and other systems. Different versions of APIs may be associated with different devices. For example, different APIs may be associated with different models of refrigerators. A system for conveniently discovering, downloading, and updating APIs for wireless communication devices is taught herein.

As taught herein, a template smart contract comprises a manifest of API components for fetching and installing into a wireless communication device. The template smart contract may also include executable instructions for fetching the API components, building an executable API based on the fetched API components, and installing the thus built executable API on the wireless communication device. The template smart contract may identify appropriate API components located in a ledger data store that comprises immutable blocks. The template smart contract, when executed, may reach out to the ledger data store and retrieve the latest API components identified by the manifest. Over time, these API components may be updated by adding new blocks to the ledger data store (e.g., changes occur not by changing blocks in the ledger, which are immutable, but by appending new blocks defining the changes to the end of the ledger). The same template smart contract can periodically or on occurrence of a predefined event reach out to the ledger data store, retrieve the latest API components, and, if any one of the API components has changed, rebuild the API and install the revised API on the wireless communication device. In this way, the API installed on the wireless communication device can be maintained up-to-date. Additionally, the ledger can authorize access of the requesting wireless communication device to the API components stored in the ledger based on rights associated to the wireless communication device.

The wireless communication device, when requesting the API initially, can provide information identifying a make and model of the wireless communication device as well as a unique identity associated with the particular device. The ledger can first authorize the access of the subject wireless communication device and then, if the device is authorized, look-up the specific version of the API suitable to this make and model of wireless communication device. In an embodiment, this entails identifying the appropriate template smart contract that will point to, reference, or identify components of the suitable API and that comprises instructions for building the suitable API using these identified components. The ledger can then send this template smart contract to the wireless communication device. The wireless communication device can execute the instructions in the template smart contract to build and install the appropriate API on the wireless communication device. Then a user of the wireless communication device or another application on the wireless communication device can use the installed appropriate API to access services from the application server.

The variety of wireless communication devices continues to increase, making the task of providing access to software services to these differently configured devices increasingly time consuming and difficult. Because providers of software services are eager to update and extend the functionality of their software services, software updates occur frequently, further increasing the complexity of providing current APIs to these diverse kinds of wireless communication devices. This system provides flexibility and scalability for delivering service APIs to a large variety of different wireless communication devices. By installing a template smart contract on a wireless communication device, the API can be conveniently updated simply by prompting the wireless communication device to rebuild the API, and the wireless communication device takes it from there. The provider of the software service can provide the updated components to the ledger. The ledger can define maps from the references or pointers of the template smart contracts to the updated components. Then, the next time a wireless communication device attempts to launch the outdated version of the API, the API may respond to the update prompt by retrieving the components referenced by the template smart contract - which will be the updated components. The wireless communication device then rebuilds the API with the updated components to create and install the updated API suitable to that particular kind or model of wireless communication device. When the API is finally launched, the updated software version is experienced by the user of the wireless communication device. This system will have the effect of smoothing the load of updating software services, because, in an embodiment, updates may flow out to devices only when the devices access the given software service. It also simplifies the process of deploying software updates. It also unloads the processing of building complete APIs from software service providers to the wireless communication devices.

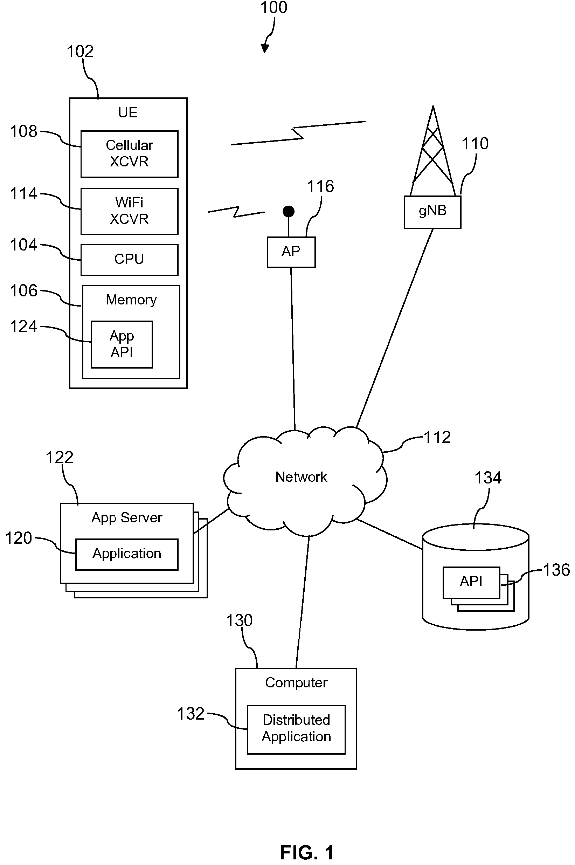

Turning now to FIG. 1, a system 100 is described. In an embodiment, the system 100 comprises a use equipment (UE) 102 that comprises a processor (CPU) 104, a memory 106, and a cellular radio transceiver 108 that is able to establish a wireless communication link with a cell site 110. In an embodiment, the UE 102 may be a smart phone, a headset computer, a wearable computer, a laptop computer, a tablet computer, a notebook computer, or a desktop computer. In an embodiment, the UE 102 may be an Internet of things (IoT) device. The cell site 110 may establish a wireless communication link with the UE 102 according to a 5G, a long-term evolution (LTE), a code division multiple access (CDMA), or a global system for mobile communications (GSM) telecommunication protocol. The cell site 110 may communicatively link the UE 102 to a network 112, and the network 112 may communicatively link the UE 102 to other communication nodes attached to the network 112, for example to an application server 122 and/or other servers attached to the network 112. The network 112 comprises one or more public networks, one or more private networks, or a combination thereof. In an embodiment, the UE 102 may comprise a WiFi radio transceiver 114 and may establish a wireless communication link with an access point (AP) 116. The AP 116 may communicatively link the UE 102 to the network 112, and the network 112 may communicatively link the UE 102 to other communication nodes.

In an example use case, the UE 102 may desire to receive application services (e.g., a user who owns the UE 102 may desire to receive application services on the UE 102) from an application 120 executing on the application server 122. The application 120 may be a personal banking application, a personal healthcare application, a retirement account application, an investment account application, a premium content streaming service application, an educational institution account application (e.g., a college student's private account at a university or college), or other application. In an embodiment, the application 120 may be said to provide access to sensitive information, for example private information about people or financial information. In order to access the services provided by application 120, the UE 102 must first establish a suitable application programming interface (API) in the memory 106, for example in a non-transitory memory portion of the memory 106. As taught herein the API 124 may be installed through a series of interactions with a distributed application 132 executing on a computer system 130. These interactions may entail the UE 102 requesting an API associated with the application 120 from the distributed application 132, wherein the request message sent by the UE 102 identifies a make and model of the UE 102 and a unique identity associated with the UE 102. The unique identity associated with the UE 102 may be a mobile subscriber ISDN number (MSISDN), an international mobile subscriber identity (IMSI), or other uniquely identifying indication. In an embodiment, the request identifies a version of firmware and/or of software installed in the UE 102. In an embodiment, the request identifies a subscription communication service account associated with the UE 102. The information in the request message identifying the make and model of the UE 102, identifying the MSISDN, identifying the IMSI, or identifying a subscription communication service account associated with the UE 102 may be referred to as a context of the UE 102.

The distributed application 132 can use the information provided in the request message sent by the UE 102 to locate a particular version of the API 136 associated with the application 120 stored in a data store 134. There may be a plurality of different versions of the API 136 because different UEs 102 may not be compatible with a single version of the API 136. Thus, a first version of the API 136 may be suitable to a late generation smart phone but a second version of the API 136 may be suitable to an earlier generation smart phone. A third version of the API 136 may be suitable to a smart phone having a first kind of operating system, but a fourth version of the API 136 may be suitable to a smart phone having a second kind of operating system. A fifth version of the API 136 may be suitable to a laptop computer, but a sixth version of the API 136 may be suitable to an loT device disposed inside of a refrigerator.

In an embodiment, the distributed application 132, in response to the request message, retrieves a suitable template smart contract from the data store 134 and sends this to the UE 102. The template smart contract comprises instructions for building the API 124 on the UE 102 as well as indexes to components with which to build the API 124. By executing the instructions for building the API 124, the UE 102 fetches the appropriate API components from the data store 134, builds the API 124 based on executing the instructions and based on the fetched API components, and installs the API 124 in the non-transitory memory portion of the memory 124. Thereafter, when the UE 102 desires to use the services of the application 120, the API 124 may be executed on the UE 102.

It will be appreciated that the system 100 may comprise any number of cell sites 110, any number of APs 116, and any number of UEs 102. It will also be appreciated that the system 100 is configured to interwork with a wide variety of UEs 102. For example, the system 100 may interoperate with a plurality of UEs 102 that are smart phones, a plurality of UEs 102 that are wearable computers, a plurality of UEs 102 that are laptop computers, a plurality of UEs 102 that are notebook computers, a plurality of UEs 102 that are tablet computers, a plurality of UEs 102 that are loT devices, and interworks with all of these different types of UEs 102 in an interleaved and concurrent fashion. It will be appreciated that the system 100 is configured to interwork with a plurality of different application servers 122 which execute different applications 120 (e.g., provide different kinds of application services to UEs 102).

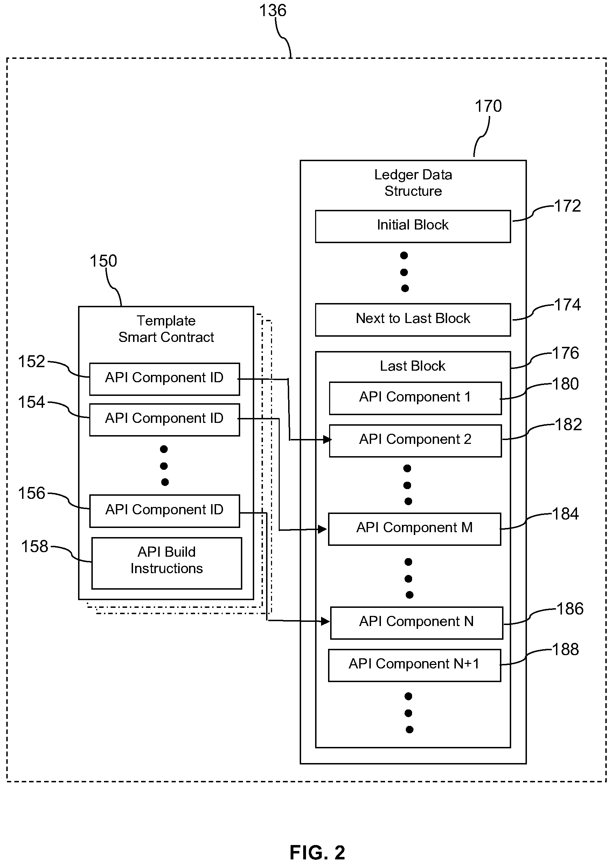

Turning now to FIG. 2, further details of the APIs 136 are provided. In an embodiment, each API 136 may be thought of as the totality of variants of APIs associated with a particular application 120. For example, a first API 136 may be associated with a first application 120 (e.g., a banking account management application), a second API 136 may be associated with a second application 120 (e.g., a retirement account management application), a third API 136 may be associated with a third application 120 (e.g., a healthcare account management application), and a fourth API 136 may be associated with a fourth application 120 (e.g., a streaming video service application). Each API 136, considered separately, may be considered to include all of the software artifacts associated with a plurality of different variants (each variant suitable to a different model and/or category of UE 102) of the given API associated with the application 120.

In an embodiment, the API 136 comprises a template smart contract 150. The template smart contract 150 comprises one or more API component identifiers. For example, as illustrated in FIG. 2, the template smart contract 150 may comprise a first API component identity 152, a second API component identity 154, and a third API component identity 156. The template smart contract 150 also comprises API build instructions 158. Each of the API component identities are associated with and identify corresponding API components stored in a last block of a ledger data structure 170. In an embodiment, different template smart contracts 150 are associated with different variants of the API of the application 120.

The ledger data structure 170 may comprise an initial block 172 and a plurality of other blocks, for example a next to last block 174, and a last block 176. Each block of the ledger data structure 170 comprises a hash of the previous block (the initial block 172 does not have a hash of the previous block as it is the first block in the ledger data structure 170), a nonce, the data content of the block, and a hash over the rest of the block. The nonce may be a randomly selected value that fulfills some criteria such as that the hash calculated over the previous hash value, the nonce, and the data content of the associated block results in a hash over the block that has four leading zero values. The ledger data structure 170 may be considered to be immutable, because blocks in the middle of the ledger data structure 170 cannot be arbitrarily changed without creating telltales of tampering (hash values will get out of synch) which can be readily identified by an audit operation performed across the whole ledger data structure 170 (e.g., traverse the ledger data structure 170 from initial block 172 to last block 176 calculating hash values and comparing to hash values stored in the block under audit at each block). In an embodiment, the distributed application 132 may store a copy of the last block 176 in a secure location of the computer system 130, whereby to provide a check on the last block of the ledger data structure 170 during an audit operation.

In an embodiment, the last block 176 contains the most up-to-date information on API components. As illustrated in FIG. 2, the last block may comprise any number of API components including a first API component 180, a second API component 182, a third API component 184, and a fourth API component 186. The first API component identity 152 may identify the second API component 182, the second API component identity 154 may identify a third API component 184, and the third API component identity 156 may identify a fourth API component 186. Other template smart contracts 150 associated with different variants of the API 136 may have API component identities that identify different API components also stored in the last block 176.

In an embodiment, only API components that are updated since the next to last block 174 are included in the last block 176. When the API build instructions 158 are executed by the UE 102, the requests for a given component received by the distributed application 132 first looks in the last block 176 for the given component. If the given API component is not found in the last block 176, then the distributed application 132 looks in the next to last block 174 for the given component. If the given API component is not found in the next to last block 174, the distributed application 132 then looks for the given API component in the next-to-the next to last block in the ledger data structure 170, and so forth. API components may be updated to add new features. API components may be updated to reduce security vulnerabilities. API components may be updated to fix bugs. API components may be updated to provide improved performance, such as more efficient processing.

With reference now to both FIG. 1 and FIG. 2, the UE 102 may request an API from the application 120, and the application 120 may prompt the distributed application 132 to provide the appropriate template smart contract 150 based on the model and type of UE 102 and possibly based on associated a unique identity of the UE 102 to a wireless communication subscription plan. The distributed application 132 may fetch the appropriate template smart contract 150 from the API 136 store in the data store 134 and send the template smart contract 150 to the application 120, and the application 120 returns the template smart contract 150 to the UE 102. Alternatively, the distributed application 132 may send the template smart contract 150 directly to the UE 102. The UE 102 executes the API build instructions 158 of the template smart contract 150 on the processor 104. By executing the API build instructions 158, the UE 102 may fetch appropriate API components identified in the template smart contract 150 from the distributed application 132 (where the distributed application 132 in turn fetches these API components from the ledger data structure 170 - in other words, the distributed application 132 may serve in part as a mediator between the UE 102 and the ledger data structure 170). The API build instructions 158 further process the received API components to build and install an application API 124 on the UE 102. The UE 102 may then execute the application API 124 to access services provided by the application 120.

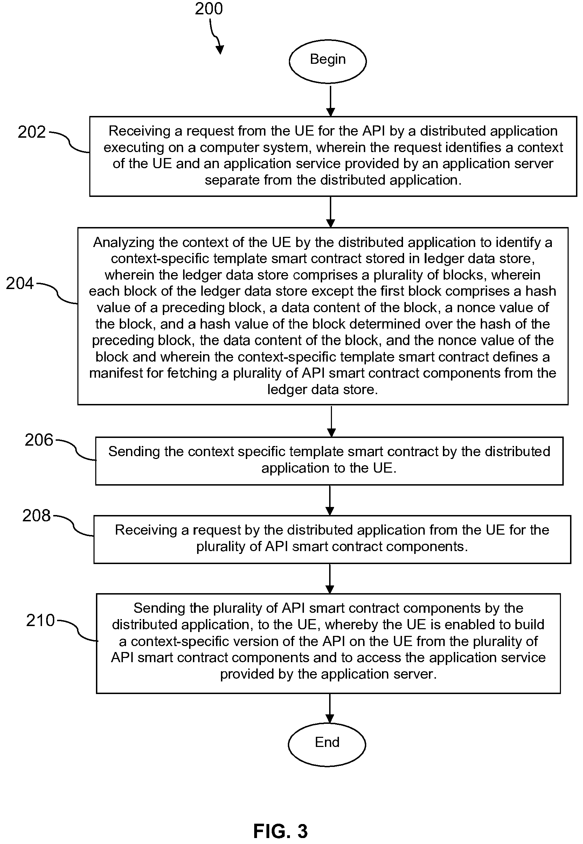

Turning now to FIG. 3, a method 200 is described. In an embodiment, the method 200 comprises a method of provisioning an application programming interface (API) to a user equipment (UE). At block 202, the method 200 comprises receiving a request from the UE for the API by a distributed application executing on a computer system, wherein the request identifies a context of the UE and an application service provided by an application server separate from the distributed application. In an embodiment, the API is associated with an application executing on a computer, the API provides access to services provided by the application executing on the computer, and the application is one of a personal banking application, a personal healthcare application, a retirement account application, an investment account application, a premium content streaming application, or an educational institution account application.

In an embodiment, the context of the UE comprises a model of the UE. In an embodiment, the context of the UE comprises an identity that links to a subscription communication service account associated with the UE. In an embodiment, the context of the UE comprises a service plan associated with the subscription communication service account associated with the UE. In an embodiment, the context of the UE comprises a firmware version or a software version installed in the UE. In an embodiment, the UE is one of a smart phone, a headset computer, a wearable computer, a laptop computer, a tablet computer, a notebook computer, a desktop computer, or an Internet of things (loT) device

At block 204, the method 200 comprises analyzing the context of the UE by the distributed application to identify a context-specific template smart contract stored in ledger data store, wherein the ledger data store comprises a plurality of blocks, wherein each block of the ledger data store except the first block comprises a hash value of a preceding block, a data content of the block, a nonce value of the block, and a hash value of the block determined over the hash of the preceding block, the data content of the block, and the nonce value of the block and wherein the context-specific template smart contract defines a manifest for fetching a plurality of API smart contract components from the ledger data store. At block 206, the method 200 comprises sending the context specific template smart contract by the distributed application to the UE.

At block 208, the method 200 comprises receiving a request by the distributed application from the UE for the plurality of API smart contract components. At block 210, the method 200 comprises sending the plurality of API smart contract components by the distributed application, to the UE, whereby the UE is enabled to build a context-specific version of the API on the UE from the plurality of API smart contract components and to access the application service provided by the application server.

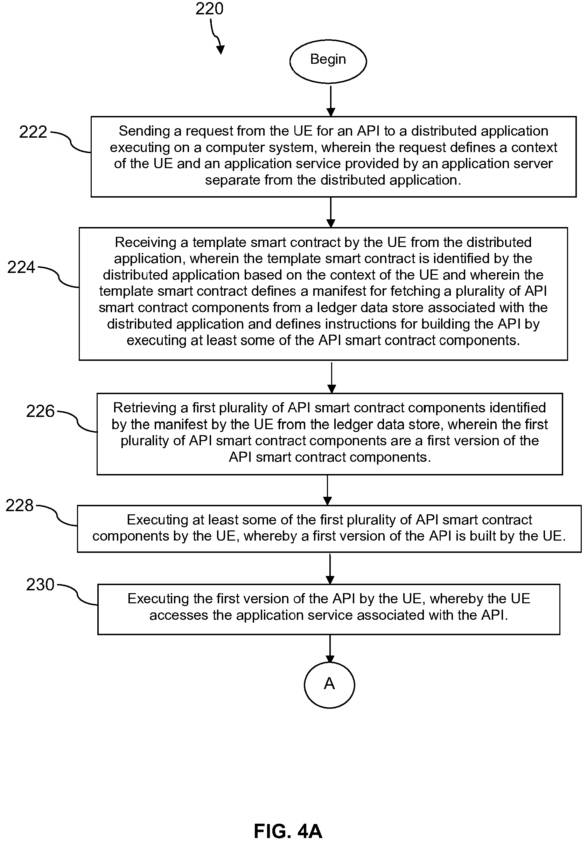

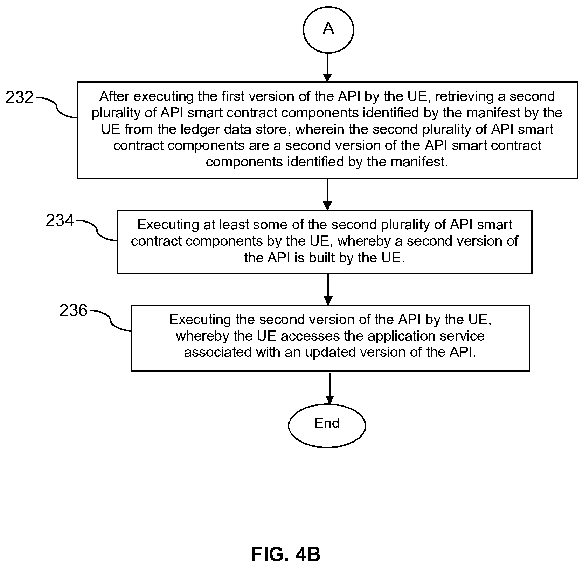

Turning now to FIG. 4A and FIG. 4B, a method 220 is described. In an embodiment, the method 220 is a method of managing an application programming interface (API) installed on user equipment (UE). In an embodiment, the UE is one of a smart phone, a headset computer, a wearable computer, a laptop computer, a tablet computer, a notebook computer, a desktop computer or an Internet of things (IoT) device.

At block 222, the method 220 comprises sending a request from the UE for an API to a distributed application executing on a computer system, wherein the request defines a context of the UE and an application service provided by an application server separate from the distributed application. In an embodiment, the API is associated with an application executing on a computer. In an embodiment, the application executing on a computer is one of a personal banking application, a personal healthcare application, a retirement account application, an investment account application, a premium content streaming application, or an educational institution account application.

At block 224, the method 220 comprises receiving a template smart contract by the UE from the distributed application, wherein the template smart contract is identified by the distributed application based on the context of the UE and wherein the template smart contract defines a manifest for fetching a plurality of API smart contract components from a ledger data store associated with the distributed application and defines instructions for building the API by executing at least some of the API smart contract components. At block 226, the method 220 comprises retrieving a first plurality of API smart contract components identified by the manifest by the UE from the ledger data store, wherein. In an embodiment, the first plurality of API smart contract components is associated with a first version of software installed on the UE.

At block 228, the method 220 comprises executing at least some of the first plurality of API smart contract components by the UE, whereby a first version of the API is built by the UE. At block 230, the method 220 comprises executing the first version of the API by the UE, whereby the UE accesses the application service associated with the API.

At block 232, the method 220 comprises, after executing the first version of the API by the UE, retrieving a second plurality of API smart contract components identified by the manifest by the UE from the ledger data store, wherein the second plurality of API smart contract components are a second version of the API smart contract components identified by the manifest. In an embodiment, the second plurality of API smart contract components is associated with a second version of software installed on the UE.

At block 234, the method 220 comprises executing at least some of the second plurality of API smart contract components by the UE, whereby a second version of the API is built by the UE. At block 236, the method 220 comprises executing the second version of the API by the UE, whereby the UE accesses the application service associated with an updated version of the API.

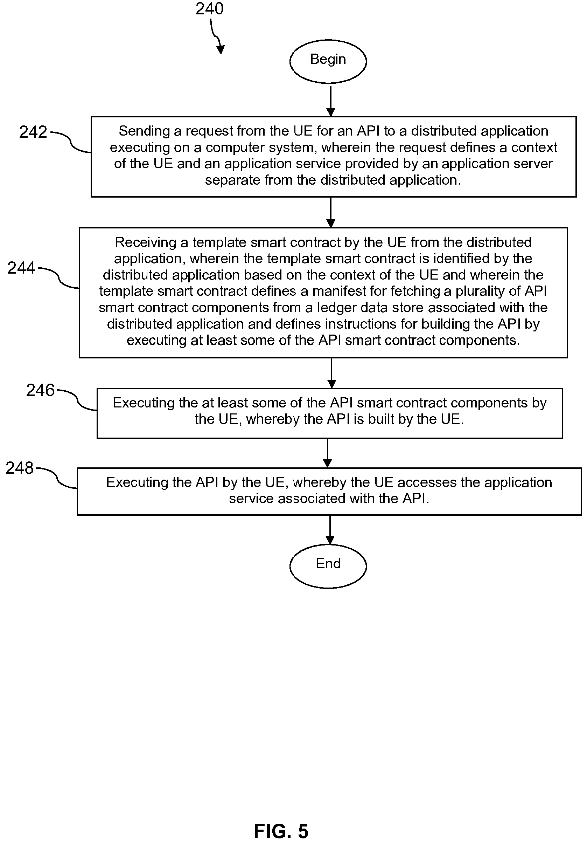

Turning now to FIG. 5, a method 240 is described. In an embodiment, the method 240 is a method of installing an application programming interface (API) in a user equipment (UE). In an embodiment, the UE is one of a smart phone, a headset computer, a wearable computer, a laptop computer, a tablet computer, a notebook computer, a desktop computer or an Internet of things (IoT) device. At block 242, the method 240 comprises sending a request from the UE for an API to a distributed application executing on a computer system, wherein the request defines a context of the UE and an application service provided by an application server separate from the distributed application. In an embodiment, the request identifies a model of the UE. In an embodiment, the request identifies a version of firmware or a version of software installed in the UE. In an embodiment, the request identifies a unique identity of the UE or a subscription communication service account associated with the UE.

At block 244, the method 240 comprises receiving a template smart contract by the UE from the distributed application, wherein the template smart contract is identified by the distributed application based on the context of the UE and wherein the template smart contract defines a manifest for fetching a plurality of API smart contract components from a ledger data store associated with the distributed application and defines instructions for building the API by executing at least some of the API smart contract components. At block 246, the method 240 comprises executing the at least some of the API smart contract components by the UE, whereby the API is built by the UE. At block 248, the method 240 comprises executing the API by the UE, whereby the UE accesses the application service associated with the API.

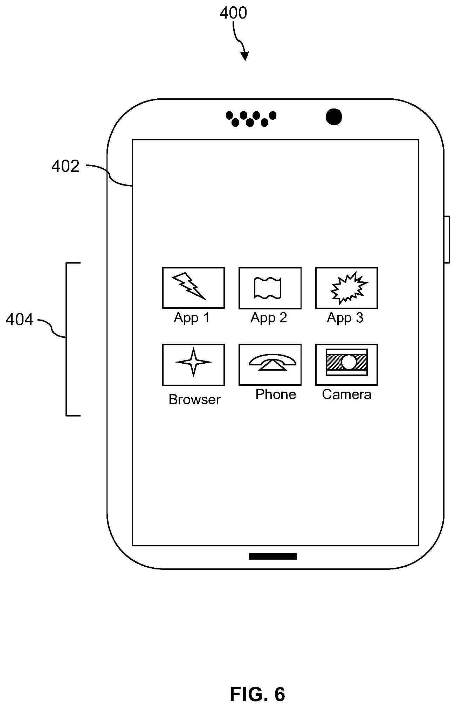

FIG. 6 depicts the user equipment (UE) 400, which is operable for implementing aspects of the present disclosure, but the present disclosure should not be limited to these implementations. Though illustrated as a mobile phone, the UE 400 may take various forms including a wireless handset, a pager, a personal digital assistant (PDA), a gaming device, or a media player. The UE 400 includes a touchscreen display 402 having a touch-sensitive surface for input by a user. A small number of application icons 404 are illustrated within the touch screen display 402. It is understood that in different embodiments, any number of application icons 404 may be presented in the touch screen display 402. In some embodiments of the UE 400, a user may be able to download and install additional applications on the UE 400, and an icon associated with such downloaded and installed applications may be added to the touch screen display 402 or to an alternative screen. The UE 400 may have other components such as electro-mechanical switches, speakers, camera lenses, microphones, input and/or output connectors, and other components as are well known in the art. The UE 400 may present options for the user to select, controls for the user to actuate, and/or cursors or other indicators for the user to direct. The UE 400 may further accept data entry from the user, including numbers to dial or various parameter values for configuring the operation of the handset. The UE 400 may further execute one or more software or firmware applications in response to user commands. These applications may configure the UE 400 to perform various customized functions in response to user interaction. Additionally, the UE 400 may be programmed and/or configured over-the-air, for example from a wireless base station, a wireless access point, or a peer UE 400. The UE 400 may execute a web browser application which enables the touch screen display 402 to show a web page. The web page may be obtained via wireless communications with a base transceiver station, a wireless network access node, a peer UE 400 or any other wireless communication network or system.

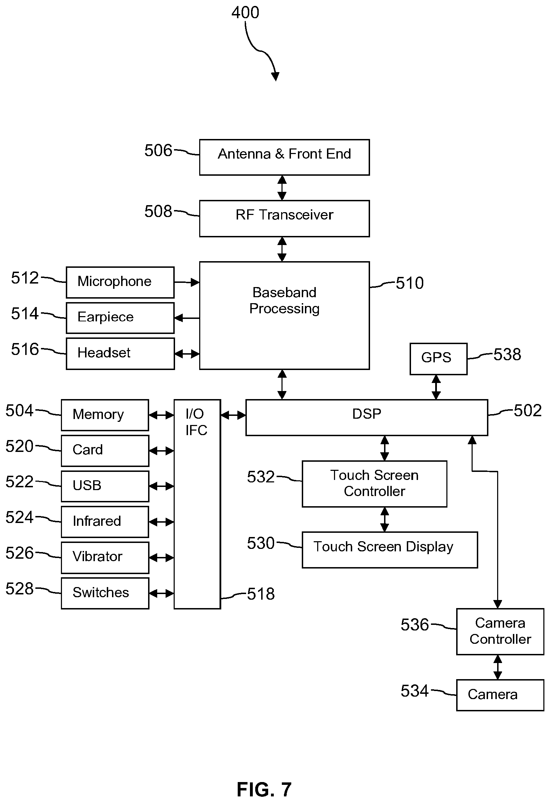

FIG. 7 shows a block diagram of the UE 400. While a variety of known components of handsets are depicted, in an embodiment a subset of the listed components and/or additional components not listed may be included in the UE 400. The UE 400 includes a digital signal processor (DSP) 502 and a memory 504. As shown, the UE 400 may further include one or more antenna and front end unit 506, a one or more radio frequency (RF) transceiver 508, a baseband processing unit 510, a microphone 512, an earpiece speaker 514, a headset port 516, an input/output interface 518, a removable memory card 520, a universal serial bus (USB) port 522, an infrared port 524, a vibrator 526, one or more electro-mechanical switches 528, a touch screen display 530, a touch screen controller 532, a camera 534, a camera controller 536, and a global positioning system (GPS) receiver 538. In an embodiment, the UE 400 may include another kind of display that does not provide a touch sensitive screen. In an embodiment, the UE 400 may include both the touch screen display 530 and additional display component that does not provide a touch sensitive screen. In an embodiment, the DSP 502 may communicate directly with the memory 504 without passing through the input/output interface 518. Additionally, in an embodiment, the UE 400 may comprise other peripheral devices that provide other functionality.

The DSP 502 or some other form of controller or central processing unit operates to control the various components of the UE 400 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB port 522 and the infrared port 524. The USB port 522 may enable the UE 400 to function as a peripheral device to exchange information with a personal computer or other computer system. The infrared port 524 and other optional ports such as a Bluetooth^{®} interface or an IEEE 802.11 compliant wireless interface may enable the UE 400 to communicate wirelessly with other nearby handsets and/or wireless base stations.

In an embodiment, one or more of the radio transceivers is a cellular radio transceiver. A cellular radio transceiver promotes establishing a wireless communication link with a cell site according to one or more of a 5G, a long term evolution (LTE), a code division multiple access (CDMA), a global system for mobile communications (GSM) wireless communication protocol. In an embodiment, one of the radio transceivers 508 may comprise a near field communication (NFC) transceiver. The NFC transceiver may be used to complete payment transactions with point-of-sale terminals or other communications exchanges. In an embodiment, each of the different radio transceivers 508 may be coupled to its own separate antenna. In an embodiment, the UE 400 may comprise a radio frequency identify (RFID) reader and/or writer device.

The switches 528 may couple to the DSP 502 via the input/output interface 518 to provide one mechanism for the user to provide input to the UE 400. Alternatively, one or more of the switches 528 may be coupled to a motherboard of the UE 400 and/or to components of the UE 400 via a different path (e.g., not via the input/output interface 518), for example coupled to a power control circuit (power button) of the UE 400. The touch screen display 530 is another input mechanism, which further displays text and/or graphics to the user. The touch screen LCD controller 532 couples the DSP 502 to the touch screen display 530. The GPS receiver 538 is coupled to the DSP 502 to decode global positioning system signals, thereby enabling the UE 400 to determine its position.

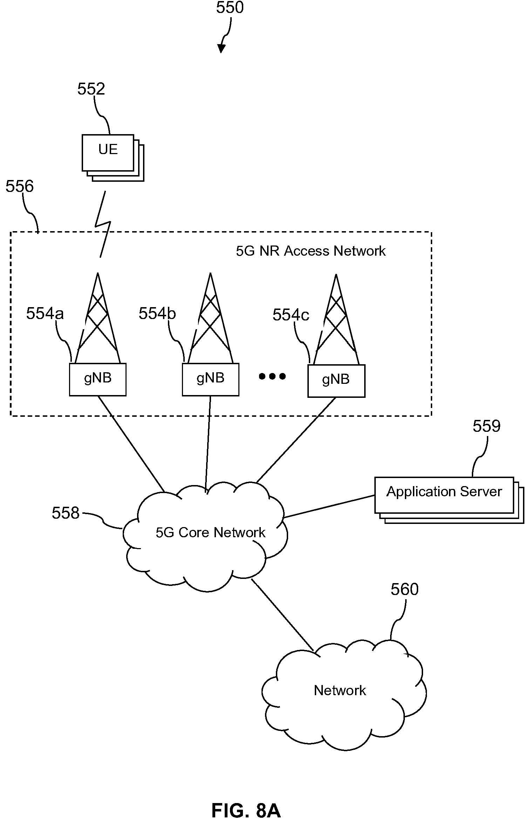

Turning now to FIG. 8A, an exemplary communication system 550 is described. Typically the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a next Generation Node B (gNB). In 4G technology (e.g., long term evolution (LTE) technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long-Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (IoT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

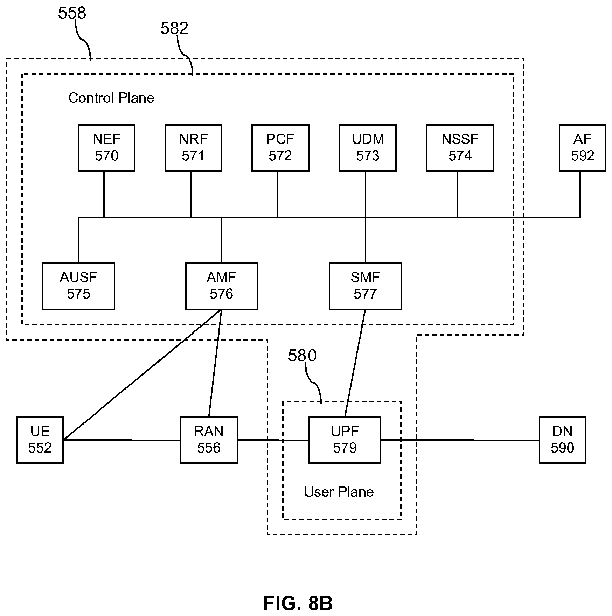

Turning now to FIG. 8B, further details of the core network 558 are described. In an embodiment, the core network 558 is a 5G core network. 5G core network technology is based on a service-based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 8A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be execute on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

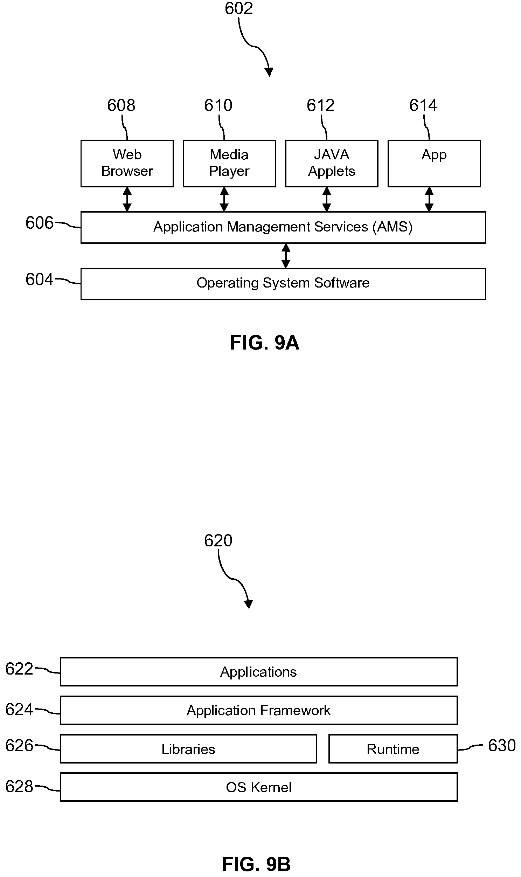

FIG. 9A illustrates a software environment 602 that may be implemented by the DSP 502. The DSP 502 executes operating system software 604 that provides a platform from which the rest of the software operates. The operating system software 604 may provide a variety of drivers for the handset hardware with standardized interfaces that are accessible to application software. The operating system software 604 may be coupled to and interact with application management services (AMS) 606 that transfer control between applications running on the UE 400. Also shown in FIG. 9A are a web browser application 608, a media player application 610, and JAVA applets 612. The web browser application 608 may be executed by the UE 400 to browse content and/or the Internet, for example when the UE 400 is coupled to a network via a wireless link. The web browser application 608 may permit a user to enter information into forms and select links to retrieve and view web pages. The media player application 610 may be executed by the UE 400 to play audio or audiovisual media. The JAVA applets 612 may be executed by the UE 400 to provide a variety of functionality including games, utilities, and other functionality.

FIG. 9B illustrates an alternative software environment 620 that may be implemented by the DSP 502. The DSP 502 executes operating system kernel (OS kernel) 628 and an execution runtime 630. The DSP 502 executes applications 622 that may execute in the execution runtime 630 and may rely upon services provided by the application framework 624. Applications 622 and the application framework 624 may rely upon functionality provided via the libraries 626.

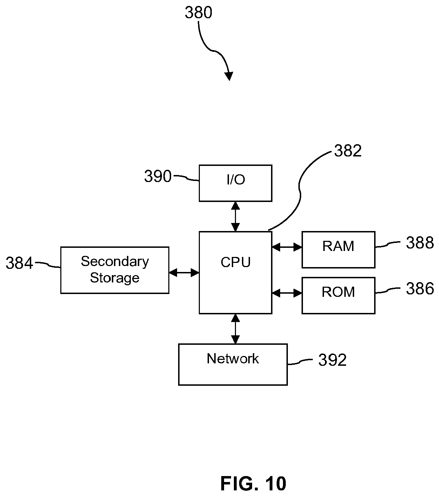

FIG. 10 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein

## Claims

1. A method of provisioning an application programming interface (API) to a user equipment (UE), comprising:
receiving a request from the UE for the API by a distributed application executing on a computer system, wherein the request identifies a context of the UE and an application service provided by an application server separate from the distributed application;
analyzing the context of the UE by the distributed application to identify a context-specific template smart contract stored in ledger data store, wherein the ledger data store comprises a plurality of blocks, wherein each block of the ledger data store except the first block comprises a hash value of a preceding block, a data content of the block, a nonce value of the block, and a hash value of the block determined over the hash of the preceding block, the data content of the block, and the nonce value of the block and wherein the context-specific template smart contract defines a manifest for fetching a plurality of API smart contract components from the ledger data store;
sending the context specific template smart contract by the distributed application to the UE;
receiving a request by the distributed application from the UE for the plurality of API smart contract components; and
sending the plurality of API smart contract components by the distributed application, to the UE, whereby the UE is enabled to build a context-specific version of the API on the UE from the plurality of API smart contract components and to access the application service provided by the application server.

2. The method of claim 1, wherein the context of the UE comprises a model of the UE.

3. The method of claim 1, wherein the context of the UE comprises an identity that links to a subscription communication service account associated with the UE and a service plan associated with the subscription communication service account associated with the UE.

4. The method of claim 1, wherein the context of the UE comprises a firmware version or a software version installed in the UE.

5. The method of claim 1, wherein the UE is one of a smart phone, a headset computer, a wearable computer, a laptop computer, a tablet computer, a notebook computer, a desktop computer, or an Internet of things (loT) device.

6. The method of claim 1, wherein the API is associated with an application executing on a computer, the API provides access to services provided by the application executing on the computer, and the application is one of a personal banking application, a personal healthcare application, a retirement account application, an investment account application, a premium content streaming application, or an educational institution account application.

7. A method of managing an application programming interface (API) installed on user equipment (UE), comprising:
sending a request from the UE for an API to a distributed application executing on a computer system, wherein the request defines a context of the UE and an application service provided by an application server separate from the distributed application;
receiving a template smart contract by the UE from the distributed application, wherein the template smart contract is identified by the distributed application based on the context of the UE and wherein the template smart contract defines a manifest for fetching a plurality of API smart contract components from a ledger data store associated with the distributed application and defines instructions for building the API by executing at least some of the API smart contract components;
retrieving a first plurality of API smart contract components identified by the manifest by the UE from the ledger data store, wherein the first plurality of API smart contract components are a first version of the API smart contract components;
executing at least some of the first plurality of API smart contract components by the UE, whereby a first version of the API is built by the UE;
executing the first version of the API by the UE, whereby the UE accesses the application service associated with the API;
after executing the first version of the API by the UE, retrieving a second plurality of API smart contract components identified by the manifest by the UE from the ledger data store, wherein the second plurality of API smart contract components are a second version of the API smart contract components identified by the manifest;
executing at least some of the second plurality of API smart contract components by the UE, whereby a second version of the API is built by the UE; and
executing the second version of the API by the UE, whereby the UE accesses the application service associated with an updated version of the API.

8. The method of claim 7, wherein the first plurality of API smart contract components is associated with a first version of software installed on the UE and where the second plurality of API smart contract components is associated with a second version of software installed on the UE.

9. The method of claim 7, wherein the API is associated with an application executing on a computer and wherein the second plurality of API smart contract components is associated with an updated version of the application executing on the computer.

10. The method of claim 9, wherein the application executing on a computer is one of a personal banking application, a personal healthcare application, a retirement account application, an investment account application, a premium content streaming application, or an educational institution account application.

11. The method of claim 9, wherein executing the first version of the API comprises sending a request from the UE to the application executing on the computer for a service.

12. The method of claim 7, wherein the UE is one of a smart phone, a headset computer, a wearable computer, a laptop computer, a tablet computer, a notebook computer, a desktop computer, or an Internet of things (loT) device.

13. A method of installing an application programming interface (API) in a user equipment (UE), comprising:
sending a request from the UE for an API to a distributed application executing on a computer system, wherein the request defines a context of the UE and an application service provided by an application server separate from the distributed application;
receiving a template smart contract by the UE from the distributed application, wherein the template smart contract is identified by the distributed application based on the context of the UE and wherein the template smart contract defines a manifest for fetching a plurality of API smart contract components from a ledger data store associated with the distributed application and defines instructions for building the API by executing at least some of the API smart contract components;
executing the at least some of the API smart contract components by the UE, whereby the API is built by the UE; and
executing the API by the UE, whereby the UE accesses the application service associated with the API.

14. The method of claim 13, wherein the UE is one of a smart phone, a headset computer, a wearable computer, a laptop computer, a tablet computer, a notebook computer, a desktop computer, or an Internet of things (loT) device.

15. The method of claim 13, wherein the request identifies a model of the UE; and
wherein the request:
identifies a version of firmware or a version of software installed in the UE; or
identifies a unique identity of the UE or a subscription communication service account associated with the UE.

## Patentansprüche

1. Verfahren zum Bereitstellen einer Anwendungsprogrammierschnittstelle (API) an eine Benutzereinrichtung (UE), umfassend:
Empfangen einer Anforderung von der UE für die API durch eine verteilte Anwendung, die auf einem Computersystem ausgeführt wird, wobei die Anforderung einen Kontext der UE und einen Anwendungsdienst identifiziert, der durch einen von der verteilten Anwendung getrennten Anwendungsserver bereitgestellt wird;
Analysieren des Kontexts der UE durch die verteilte Anwendung, um eine kontextspezifische Smart-Contract-Vorlage zu identifizieren, die in einem Ledger-Datenspeicher gespeichert ist, wobei der Ledger-Datenspeicher eine Vielzahl von Blöcken umfasst, wobei jeder Block des Ledger-Datenspeichers mit Ausnahme des ersten Blocks einen Hash-Wert eines vorhergehenden Blocks, einen Dateninhalt des Blocks, einen Nonce-Wert des Blocks und einen Hash-Wert des Blocks umfasst, der über den Hash des vorhergehenden Blocks, den Dateninhalt des Blocks und den Nonce-Wert des Blocks bestimmt wird, und wobei die kontextspezifische Smart-Contract-Vorlage ein Manifest zum Abrufen einer Vielzahl von API-Smart-Contract-Komponenten aus dem Ledger-Datenspeicher definiert;
Senden der kontextspezifischen Smart-Contract-Vorlage durch die verteilte Anwendung an die UE;
Empfangen einer Anforderung durch die verteilte Anwendung von der UE für die Vielzahl von API-Smart-Contract-Komponenten; und
Senden der Vielzahl von API-Smart-Contract-Komponenten durch die verteilte Anwendung an die UE, wodurch die UE in die Lage versetzt wird, aus der Vielzahl von API-Smart-Contract-Komponenten eine kontextspezifische Version der API auf der UE zu erstellen und auf den Anwendungsdienst zuzugreifen, der durch den Anwendungsserver bereitgestellt wird.

2. Verfahren nach Anspruch 1, wobei der Kontext der UE ein Modell der UE umfasst.

3. Verfahren nach Anspruch 1, wobei der Kontext der UE eine Identität, die mit einem Abonnement-Kommunikationsdienstkonto verknüpft ist, das der UE zugeordnet ist, und einen Dienstplan umfasst, der dem Abonnement-Kommunikationsdienstkonto zugeordnet ist, das der UE zugeordnet ist.

4. Verfahren nach Anspruch 1, wobei der Kontext der UE eine Firmware-Version oder eine Software-Version umfasst, die in der UE installiert ist.

5. Verfahren nach Anspruch 1, wobei die UE eines von einem Smartphone, einem Headset-Computer, einem tragbaren Computer, einem Laptop-Computer, einem Tablet-Computer, einem Notebook-Computer, einem Desktop-Computer oder einer Internet-der-Dinge-Vorrichtung (IoT-Vorrichtung) ist.

6. Verfahren nach Anspruch 1, wobei die API einer Anwendung zugeordnet ist, die auf einem Computer ausgeführt wird, die API Zugriff auf Dienste bereitstellt, die durch die Anwendung bereitgestellt werden, die auf dem Computer ausgeführt wird, und die Anwendung eines von einer Anwendung für private Bankgeschäfte, einer Anwendung für eine persönliche Gesundheitsfürsorge, einer Anwendung für ein Pensionskonto, einer Anwendung für ein Anlagekonto, einer Anwendung zum Streamen von Premiuminhalten oder einer Anwendung für ein Konto einer Bildungseinrichtung ist.

7. Verfahren zum Verwalten einer Anwendungsprogrammierschnittstelle (API), die auf einer Benutzereinrichtung (UE) installiert ist, umfassend:
Senden einer Anforderung von der UE für eine API an eine verteilte Anwendung, die auf einem Computersystem ausgeführt wird, wobei die Anforderung einen Kontext der UE und einen Anwendungsdienst definiert, der durch einen von der verteilten Anwendung getrennten Anwendungsserver bereitgestellt wird;
Empfangen einer Smart-Contract-Vorlage durch die UE von der verteilten Anwendung, wobei die Smart-Contract-Vorlage durch die verteilte Anwendung basierend auf dem Kontext der UE identifiziert wird und wobei die Smart-Contract-Vorlage ein Manifest zum Abrufen einer Vielzahl von API-Smart-Contract-Komponenten aus einem Ledger-Datenspeicher definiert, der der verteilten Anwendung zugeordnet ist, und Anweisungen zum Erstellen der API durch Ausführen mindestens einiger der API-Smart-Contract-Komponenten definiert;
Abfragen einer ersten Vielzahl von API-Smart-Contract-Komponenten, die durch das Manifest durch die UE identifiziert werden, aus dem Ledger-Datenspeicher, wobei die erste Vielzahl von API-Smart-Contract-Komponenten eine erste Version der API-Smart-Contract-Komponenten ist;
Ausführen von mindestens einigen der ersten Vielzahl von API-Smart-Contract-Komponenten durch die UE, wodurch eine erste Version der API durch die UE erstellt wird;
Ausführen der ersten Version der API durch die UE, wodurch die UE auf den Anwendungsdienst zugreift, der der API zugeordnet ist;
nach dem Ausführen der ersten Version der API durch die UE, Abfragen einer zweiten Vielzahl von API-Smart-Contract-Komponenten, die durch das Manifest durch die UE identifiziert werden, aus dem Ledger-Datenspeicher, wobei die zweite Vielzahl von API-Smart-Contract-Komponenten eine zweite Version der durch das Manifest identifizierten API-Smart-Contract-Komponenten ist;
Ausführen von mindestens einigen der zweiten Vielzahl von API-Smart-Contract-Komponenten durch die UE, wodurch eine zweite Version der API durch die UE erstellt wird; und
Ausführen der zweiten Version der API durch die UE, wodurch die UE auf den Anwendungsdienst zugreift, der einer aktualisierten Version der API zugeordnet ist.

8. Verfahren nach Anspruch 7, wobei die erste Vielzahl von API-Smart-Contract-Komponenten einer ersten Version von Software zugeordnet ist, die auf der UE installiert ist, und wobei die zweite Vielzahl von API-Smart-Contract-Komponenten einer zweiten Version der Software zugeordnet ist, die auf der UE installiert ist.

9. Verfahren nach Anspruch 7, wobei die API einer Anwendung zugeordnet ist, die auf einem Computer ausgeführt wird, und wobei die zweite Vielzahl von API-Smart-Contract-Komponenten einer aktualisierten Version der Anwendung zugeordnet ist, die auf dem Computer ausgeführt wird.

10. Verfahren nach Anspruch 9, wobei die Anwendung, die auf einem Computer ausgeführt wird, eines von einer Anwendung für private Bankgeschäfte, einer Anwendung für eine persönliche Gesundheitsfürsorge, einer Anwendung für ein Pensionskonto, einer Anwendung für ein Anlagekonto, einer Anwendung zum Streamen von Premiuminhalten oder einer Anwendung für ein Konto einer Bildungseinrichtung ist.

11. Verfahren nach Anspruch 9, wobei das Ausführen der ersten Version der API das Senden einer Anforderung von der UE an die Anwendung für einen Dienst umfasst, die auf dem Computer ausgeführt wird.

12. Verfahren nach Anspruch 7, wobei die UE eines von einem Smartphone, einem Headset-Computer, einem tragbaren Computer, einem Laptop-Computer, einem Tablet-Computer, einem Notebook-Computer, einem Desktop-Computer oder einer Internet-der-Dinge-Vorrichtung (IoT-Vorrichtung) ist.

13. Verfahren zum Installieren einer Anwendungsprogrammierschnittstelle (API) in einer Benutzereinrichtung (UE), umfassend:
Senden einer Anforderung von der UE für eine API an eine verteilte Anwendung, die auf einem Computersystem ausgeführt wird, wobei die Anforderung einen Kontext der UE und einen Anwendungsdienst definiert, der durch einen von der verteilten Anwendung getrennten Anwendungsserver bereitgestellt wird;
Empfangen einer Smart-Contract-Vorlage durch die UE von der verteilten Anwendung, wobei die Smart-Contract-Vorlage durch die verteilte Anwendung basierend auf dem Kontext der UE identifiziert wird und wobei die Smart-Contract-Vorlage ein Manifest zum Abrufen einer Vielzahl von API-Smart-Contract-Komponenten aus einem Ledger-Datenspeicher definiert, der der verteilten Anwendung zugeordnet ist, und Anweisungen zum Erstellen der API durch Ausführen mindestens einiger der API-Smart-Contract-Komponenten definiert;
Ausführen von mindestens einigen der API-Smart-Contract-Komponenten durch die UE, wodurch die API durch die UE erstellt wird; und
Ausführen der API durch die UE, wodurch die UE auf den Anwendungsdienst zugreift, der der API zugeordnet ist.

14. Verfahren nach Anspruch 13, wobei die UE eines von einem Smartphone, einem Headset-Computer, einem tragbaren Computer, einem Laptop-Computer, einem Tablet-Computer, einem Notebook-Computer, einem Desktop-Computer oder einer Internet-der-Dinge-Vorrichtung (IoT-Vorrichtung) ist.

15. Verfahren nach Anspruch 13, wobei die Anforderung ein Modell der UE identifiziert; und
wobei die Anforderung:
eine Version der Firmware oder eine Version der Software, die in der UE installiert ist, identifiziert; oder
eine eindeutige Identität der UE oder einem Abonnementkommunikationsdienstkontos, das der UE zugeordnet ist, identifiziert.

## Revendications

1. Procédé de provisionnement d'une interface de programmation d'application (API) pour un équipement utilisateur (UE), comprenant :
la réception, par une application distribuée s'exécutant sur un système informatique, d'une demande provenant de l'UE pour l'API, dans lequel la demande identifie un contexte de l'UE et un service d'application fourni par un serveur d'application distinct de l'application distribuée ;
l'analyse du contexte de l'UE par l'application distribuée afin d'identifier un modèle de contrat intelligent spécifique au contexte stocké dans un magasin de données de registre, dans lequel le magasin de données de registre comprend une pluralité de blocs, dans lequel chaque bloc du magasin de données de registre, à l'exception du premier bloc, comprend une valeur de hachage d'un bloc précédent, un contenu de données du bloc, une valeur de nonce du bloc et une valeur de hachage du bloc déterminée sur le hachage du bloc précédent, le contenu de données du bloc et la valeur de nonce du bloc, et dans lequel le modèle de contrat intelligent spécifique au contexte définit un manifeste pour la récupération d'une pluralité de composants de contrat intelligent d'API à partir du magasin de données de registre ;
l'envoi à l'UE, par l'application distribuée, du modèle de contrat intelligent spécifique au contexte ;
la réception, par l'application distribuée, d'une demande provenant de l'UE pour la pluralité de composants de contrat intelligent de l'API ; et
l'envoi à l'UE, par l'application distribuée, de la pluralité de composants de contrat intelligent d'API, moyennant quoi l'UE est autorisé à construire, sur l'UE, une version spécifique au contexte de l'API à partir de la pluralité de composants de contrat intelligent d'API et à accéder au service d'application fourni par le serveur d'application.

2. Procédé selon la revendication 1, dans lequel le contexte de l'UE comprend un modèle de l'UE.

3. Procédé selon la revendication 1, dans lequel le contexte de l'UE comprend une identité liée à un compte de service de communication par abonnement associé à l'UE et un plan de service associé au compte de service de communication par abonnement associé à l'UE.

4. Procédé selon la revendication 1, dans lequel le contexte de l'UE comprend une version de micrologiciel ou une version de logiciel installée dans l'UE.

5. Procédé selon la revendication 1, dans lequel l'UE est l'un parmi un téléphone intelligent, un ordinateur de casque, un ordinateur prêt-à-porter, un ordinateur portable, une tablette électronique, un bloc-notes électronique, un ordinateur de bureau ou un dispositif de l'Internet des objets (loT).

6. Procédé selon la revendication 1, dans lequel l'API est associée à une application s'exécutant sur un ordinateur, l'API fournit un accès à des services fournis par l'application s'exécutant sur l'ordinateur, et l'application est l'une parmi une application bancaire personnelle, une application de soins de santé personnels, une application de compte de retraite, une application de compte d'investissement, une application de diffusion en continu de contenu premium, ou une application de compte d'établissement d'enseignement.

7. Procédé de gestion d'une interface de programmation d'application (API) installée sur un équipement utilisateur (UE), comprenant :
l'envoi d'une demande de l'UE pour une API à une application distribuée s'exécutant sur un système informatique, dans lequel la demande définit un contexte de l'UE et un service d'application fourni par un serveur d'application distinct de l'application distribuée ;
la réception, par l'UE, d'un modèle de contrat intelligent provenant de l'application distribuée, dans lequel le modèle de contrat intelligent est identifié par l'application distribuée en fonction du contexte de l'UE et dans lequel le modèle de contrat intelligent définit un manifeste pour la récupération d'une pluralité de composants de contrat intelligent d'API à partir d'un magasin de données de registre associé à l'application distribuée et définit des instructions pour la construction de l'API par exécution d'au moins certains des composants de contrat intelligent d'API ;
la récupération, par l'UE, d'une première pluralité de composants de contrat intelligent d'API identifiés par le manifeste dans le magasin de données de registre, dans lequel la première pluralité de composants de contrat intelligent d'API sont une première version des composants de contrat intelligent d'API ;
l'exécution, par l'UE, d'au moins certains composants de la première pluralité de composants de contrat intelligent d'API, moyennant quoi une première version de l'API est construite par l'UE ;
l'exécution, par l'UE, de la première version de l'API, moyennant quoi l'UE accède au service d'application associé à l'API ;
après l'exécution de la première version de l'API par l'UE, la récupération, par l'UE, d'une seconde pluralité de composants de contrat intelligent d'API identifiés par le manifeste dans le magasin de données de registre, dans lequel la seconde pluralité de composants de contrat intelligent d'API sont une seconde version des composants de contrat intelligent d'API identifiés par le manifeste ;
l'exécution, par l'UE, d'au moins certains composants de la seconde pluralité de composants de contrat intelligent d'API, moyennant quoi une seconde version de l'API est construite par l'UE ; et
l'exécution, par l'UE, de la seconde version de l'API, moyennant quoi l'UE accède au service d'application associé à une version actualisée de l'API.

8. Procédé selon la revendication 7, dans lequel la première pluralité de composants de contrat intelligent d'API est associée à une première version de logiciel installée sur l'UE et où la seconde pluralité de composants de contrat intelligent d'API est associée à une seconde version du logiciel installée sur l'UE.

9. Procédé selon la revendication 7, dans lequel l'API est associée à une application s'exécutant sur un ordinateur et dans lequel la seconde pluralité de composants de contrat intelligent d'API est associée à une version actualisée de l'application s'exécutant sur l'ordinateur.

10. Procédé selon la revendication 9, dans lequel l'application s'exécutant sur un ordinateur est l'une parmi une application bancaire personnelle, une application de soins de santé personnelle, une application de compte de retraite, une application de compte d'investissement, une application de diffusion en continu de contenu premium ou une application de compte d'établissement d'enseignement.

11. Procédé selon la revendication 9, dans lequel l'exécution de la première version de l'API comprend l'envoi d'une demande de l'UE à l'application s'exécutant sur l'ordinateur pour un service.

12. Procédé selon la revendication 7, dans lequel l'UE est un l'un parmi un téléphone intelligent, un ordinateur de casque, un ordinateur prêt-à-porter, un ordinateur portable, une tablette électronique, un bloc-notes électronique, un ordinateur de bureau ou un dispositif de l'Internet des objets (loT).

13. Procédé d'installation d'une interface de programmation d'application (API) dans un équipement utilisateur (UE), comprenant :
l'envoi d'une demande de l'UE pour une API à une application distribuée s'exécutant sur un système informatique, dans lequel la demande définit un contexte de l'UE et un service d'application fourni par un serveur d'application distinct de l'application distribuée ;
la réception, par l'UE, d'un modèle de contrat intelligent provenant de l'application distribuée, dans lequel le modèle de contrat intelligent est identifié par l'application distribuée en fonction du contexte de l'UE et dans lequel le modèle de contrat intelligent définit un manifeste pour la récupération d'une pluralité de composants de contrat intelligent d'API à partir d'un magasin de données de registre associé à l'application distribuée et définit des instructions pour la construction de l'API par exécution d'au moins certains des composants de contrat intelligent d'API ;
l'exécution, par l'UE, de l'au moins certains des composants de contrat intelligent d'API, moyennant quoi l'API est construite par l'UE ; et
l'exécution, par l'UE, de l'API, moyennant quoi l'UE accède au service d'application associé à l'API.

14. Procédé selon la revendication 13, dans lequel l'UE est l'un parmi un téléphone intelligent, un ordinateur de casque, un ordinateur prêt-à-porter, un ordinateur portable, une tablette électronique, un bloc-notes électronique, un ordinateur de bureau ou un dispositif de l'Internet des objets (loT).

15. Procédé selon la revendication 13, dans lequel la demande identifie un modèle de l'UE ; et
dans lequel la demande :
identifie une version de micrologiciel ou une version de logiciel installée sur l'UE ; ou
identifie une identité unique de l'UE ou un compte de service de communication par abonnement associé à l'UE.
